# EUROPEAN PATENT APPLICATION

(11) **EP 2 048 119 A1**
(43) Date of publication of application: **15.04.2009**
(21) Application number: 07019883.3
(22) Date of filing: 11.10.2007
(51) Int. Cl.: C03B 33/07, C03C 15/00, G02F 1/1333

(54) **Method for cutting glass laminate and flat panel display**

(71) Applicant: Nishiyama Stainless Chemical Co., Ltd., Toyonaka-shi Osaka 561-0845 (JP)
(72) Inventor: Nishiyama, Tomohiro, Toyonaka-shi Osaka 561-0845 (JP)
(74) Representative: Kloiber, Thomas

(57) **Abstract**

Disclosed herein is a method for cutting a glass laminate including first and second glass plates, which includes: a first scribing step of forming a first scribe line on the surface of the first glass plate; an additional etching step of bringing the glass laminate into contact with an etchant to reduce the thickness of the entire glass laminate; a second scribing step of forming a second scribe line as a counterpart of the first scribe line on the surface of the second glass plate of the glass laminate whose thickness has been reduced, and a cutting step of applying stress to the glass laminate to cut the glass laminate along the scribe lines, wherein these steps are performed in this order. In the invention, a glass laminate, in which fractures starting from a scribe line before the cutting of a glass laminate is performed can be suppressed, can be cut.

## Description

### BACKGROUND OF THE INVENTION

### 1. Field of the Invention

The present invention relates to a method for cutting a glass plate, more particularly to a method for cutting a glass laminate including a pair of glass plates bonded together.

### 2. Description of the Prior Art

A glass plate is cut by forming a scribe line on the surface of the glass plate and applying stress to the scribe line. As one example of such a glass cutting method, the applicant of the present invention has proposed a method for cutting a glass plate, which is disclosed in Japanese Patent Application Laid-open No. 2004-307318.

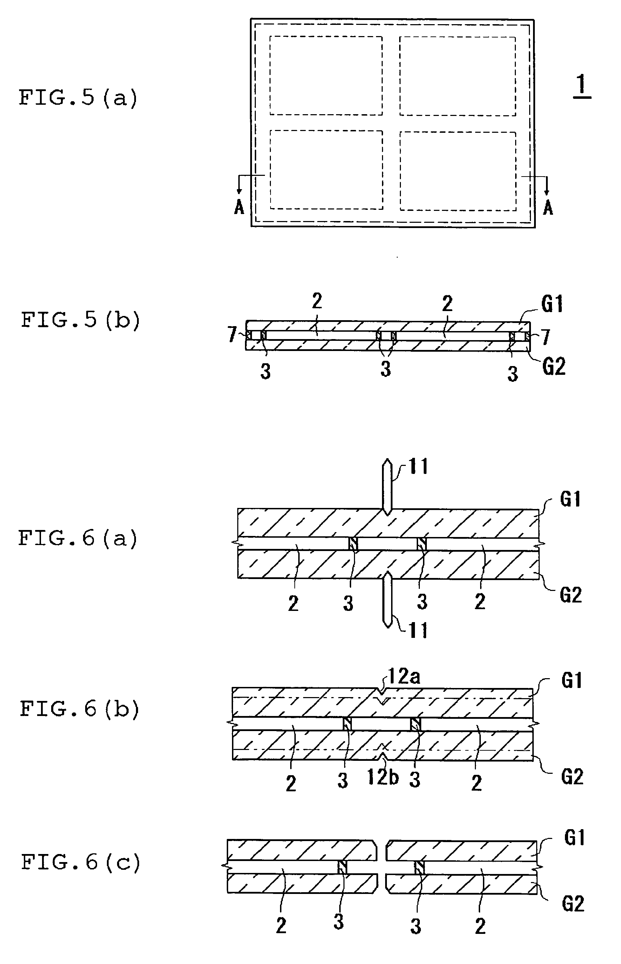

The glass cutting method disclosed in Japanese Patent Application Laid-open No. 2004-307318 is a method which enables to cut a glass laminate for a liquid crystal display having a plurality of liquid crystal cells. Fig. 5(a) is a plan view of a glass laminate 1 having a plurality of liquid crystal cell regions, and Fig. 5 (b) is a schematic sectional view of the glass laminate 1 taken along the A-A line shown in Fig. 5 (a) . As shown in Fig. 5(b), the glass laminate 1 includes a glass plate G1 and a glass plate G2, and there are provided a plurality of liquid crystal cell regions 2 between the glass plates G1 and G2. The liquid crystal cell regions 2 are separated from each other by a resin 3 serving as a partition. Each of the liquid crystal cell regions 2 is entirely sealed with a resin 7 provided along the periphery of the glass laminate 1 to prevent the entry of a liquid into the gap between the glass plates G1 and G2 opposed to each other. It is to be noted that a liquid crystal can be injected into the liquid crystal cell regions 2 either before or after the cutting of the glass laminate 1 is performed.

Figs. 6(a) to 6(c) are sectional views for illustrating the method for cutting a glass laminate disclosed in the Japanese Patent Application Laid-open No. 2004-307318. More specifically, Fig. 6 (a) is a sectional view which shows the step of forming scribe lines on the surface of glass plates, Fig. 6(b) is a sectional view which shows the step of etching the surface of the glass plates, and Fig. 6(c) is a sectional view which shows the step of cutting a glass laminate.

A glass laminate 1 is cut by performing the steps shown in Figs. 6(a) to 6(c) in this order. First, as shown in Fig. 6 (a) , scribe lines 12a and 12b are formed on the surface of the glass plates G1 and G2 with the use of a diamond or cemented carbide wheel cutter 11. Then, as shown in Fig. 6(b), the surface of the glass plates G1 and G2 having the scribe lines 12a and 12b is etched by immersing the glass laminate in an etchant. Then, mechanical stress is applied to the scribe lines 12a and 12b through the application of a load or tension to cut the glass laminate along the scribe lines 12a and 12b.

Such a glass cutting method disclosed in the Japanese Patent Application Laid-open No. 2004-307318 has the advantage that cutting of the glass laminate can be smoothly performed because cracks produced in the glass plates due to the formation of scribe lines are removed by bringing the glass laminate into contact with an etchant.

Meanwhile, in recent years, the thickness of a liquid crystal display is becoming smaller by reducing the thickness of glass plates used therein. However, in the case of using the glass cutting method disclosed in the Japanese Patent Application Laid-open No. 2004-307318, there is a possibility that fractures are produced in the glass laminate before the cutting step shown in Fig. 6(c) is performed. Particularly, there is a fear that during the immersion of the glass laminate in an etchant, the glass laminate is shaken by the flow of the etchant and is therefore bent so that fractures starting from the scribe lines 12a and 12b are produced in the glass plates G1 and G2. In addition, there is also a possibility that fractures starting from the scribe lines 12a and 12b are produced in the glass plates G1 and G2 when the glass laminate is taken out of the etchant.

If such fractures are produced in the glass plates G1 and G2, the glass laminate produced through various steps will have been wasted. Further, in these days, the size of a glass laminate for a liquid crystal display is becoming larger because of the increased size of a display screen and for the purpose of increasing production efficiency, and therefore the problem of fracture of a glass laminate is becoming more serious.

Further, when the amount of etching performed on a glass laminate is increased to maximally reduce the thickness of the glass laminate, there is a case where a cutting line (scribe line) initially formed sharply is deeply etched by chemical polishing so that the surface of a cutting groove grown from the cutting line becomes completely smooth, which makes it difficult to cut the glass laminate.

In view of the above problems, it is an object of the present invention to provide a method for cutting a glass laminate whereby cutting of a glass laminate including glass plates having a thickness smaller than ever before can be smoothly accomplished without producing fractures in the glass plates in the course of reducing the thickness of the glass plates.

### SUMMARY OF THE INVENTION

In order to achieve the above object, the present invention is directed to a method for cutting a glass laminate including a first glass plate and a second glass plate, the method including: a first step of forming a first scribe line on the surface of the first glass plate; a second step of bringing the first scribe line into contact with an etchant; a third step of forming a second scribe line as a counterpart of the first scribe line on the surface of the second glass plate of the glass laminate which has been subjected to the second step; and a fourth step of applying stress to the glass laminate to cut the glass laminate along the two scribe lines, wherein the first to fourth steps are performed in this order.

The cutting method according to the present invention can be used to manufacture a flat panel display panel and a flat panel display. It is to be noted that in the fourth step, the glass laminate is preferably cut by applying mechanical stress or thermal stress thereto.

Further, it is preferred that the cutting method according to the present invention further includes, prior to the first step, the step of bringing the glass laminate into contact with an etchant to reduce the thickness of the entire glass laminate. By providing such a step, it is possible to limit the amount of etching performed in the second step on each of the first and second glass plates to about 10 to 60 µm, thereby preventing the surface of a cutting groove grown from the scribe line from becoming smooth more than necessary in the second step. Anyway, the amount of polishing performed in the second step on each of the glass plates is less than 100 µm, preferably 10 to 60 µm, more preferably 10 to 40 µm.

Further, the present invention is also directed to a flat panel display including a first glass plate not to be exposed to a user and a second glass plate to be exposed to a user, the first and second glass plates being bonded together, wherein the second glass plate entirely has a peripheral side surface physically cut, but on the other hand, the first glass plate has a peripheral side surface, at least part of which on the outer surface side thereof has been made smooth by etching a cutting line physically formed.

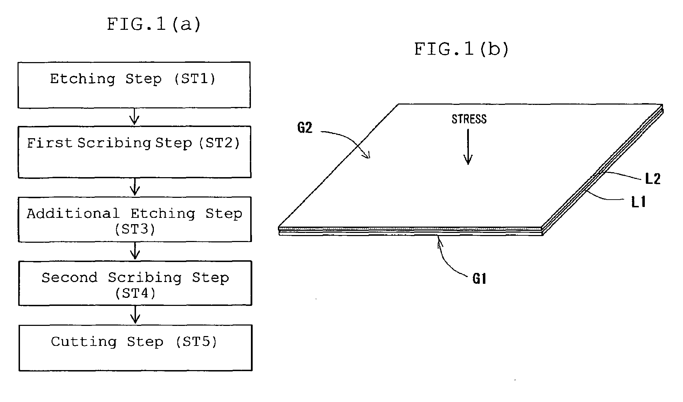

According to the present invention, at least the peripheral line of the first glass plate (not to be exposed to a user) on the outer surface side thereof is made smooth, and cracks produced in the first glass plate due to the formation of a scribe line are completely removed. Therefore, the flat panel display according to the present invention is less likely to be fractured even when a pressure is applied to the flat panel display in the direction from the second glass plate G2 exposed to a user to the first glass plate G1 in use (see Fig. 1(b)). More specifically, the peripheral line L1 of the first glass plate G1 on the outer surface side thereof most stretched by the application of a pressure is made smooth so that there is no starting point to produce fractures in the glass plate and therefore the glass laminate has excellent fracture resistance.

In order to maximally enhance the fracture resistance of the flat panel display, the flat panel display may further be subjected to a step according to a forth aspect of the present invention. In this case, the peripheral side surface of each of the first and second glass plates G1 and G2 can be made entirely smooth. However, a flat panel display according to an eighth aspect of the present invention exhibits sufficiently high fracture resistance in the case of normal use.

Alternatively, in order to enhance the fracture resistance, a cutting method according to a fifth aspect of the present invention is also preferably used. The cutting method according to the fifth aspect is a method for cutting a glass laminate including a first glass plate and a second glass plate, the method including: a first etching step of bringing the entire glass laminate into contact with an etchant to reduce the thickness of the glass laminate to a value slightly thicker than a target thickness; a scribing step of forming a pair of scribe lines on the surface of the first and second glass plates which have been subjected to the first etching step; a second etching step of bringing the entire glass laminate into contact with an etchant to reduce the thickness of the glass laminate to the target thickness; and a cutting step of applying stress to the glass laminate which has been subjected to the second etching step to cut the glass laminate along the pair of scribe lines, wherein the amount of etching performed in the second etching step on each of the glass plates is limited to less than 100 µm. The amount of etching performed in the second etching step on each of the glass plates is preferably limited to 10 to 60 µm, most preferably 10 to 40 µm.

According to the cutting method of the present invention, it is possible to smoothly cut a glass laminate including glass plates having a thickness smaller than ever before without producing fractures in the glass plates in the course of reducing the thickness of the glass plates.

### BRIEF DESCRIPTION OF THE DRAWINGS

Fig. 1 (a) is a flow diagram which shows the steps of a method for cutting a glass laminate according to a first embodiment of the present invention and Fig. 1(b) is a perspective view of a flat panel display according to the present invention;
Figs. 2(a) to 2 (d) are sectional views for illustrating the steps shown in Fig. 1(a);
Fig. 3 is a flow diagram which shows the steps of a method for cutting a glass laminate according to a second embodiment of the present invention;
Figs. 4 (a) to 4 (d) are sectional views for illustrating the steps shown in Fig. 3;
Fig. 5(a) is a plan view of a glass laminate having a plurality of display regions and Fig. 5 (b) is a sectional view of the glass laminate shown in Fig. 5(a); and
Figs. 6(a) to 6(c) are sectional views for illustrating a conventional method for cutting a glass laminate.

### DETAILED DESCRIPTION OF THE INVENTION

Hereinbelow, a method for cutting a glass plate according to the present invention will be described with reference to the following embodiments. Fig. 1(a) is a flow diagram which shows the steps of a method for cutting a glass laminate according to a first embodiment of the present invention. According to this method, the thickness of a glass laminate including a second glass plate G2 to be exposed to a user and a first glass plate G1 not to be exposed to a user is reduced to a target thickness T, and a cutting groove having an appropriate depth is formed.

More specifically, the method for cutting a glass laminate according to the first embodiment of the present invention is accomplished by performing the following steps in order: an etching step (ST1) of chemically polishing a glass laminate to reduce the thickness of the glass laminate to a value slightly thicker than a target thickness; a first scribing step (ST2) of forming a first scribe line as a cutting line on the surface of a first glass plate G1 not to be exposed to a user; an additional etching step (ST3) of bringing the first scribe line into contact with an etchant; a second scribing step (ST4) of forming a predetermined second scribe line on the surface of a second glass plate G2; and a cutting step (ST5) of applying stress to the scribe lines formed on the surface of the first and second glass plates to cut the glass laminate.

Fig. 5(a) is a plan view of a glass laminate 1 that is an object to be cut by the cutting method according to the present invention, and Fig. 5(b) is a schematic sectional view of the glass laminate 1 taken along the A-A line shown in Fig. 5(a). The glass laminate 1 shown in Fig. 5 has a thickness of 1.4 mm or less and a size of 400 mm x 500 mm, and is used for liquid crystal display panels. Such a glass laminate 1 includes a second glass plate G2 to be exposed to a user as an image display screen of a liquid crystal display and a first glass plate G1 provided behind the image display screen, and the first and second glass plates are bonded together.

On the surface of the first glass plate G1 faced toward the second glass plate G2, there are provided a thin film transistor and a transparent electrode (not shown), and an alignment film (not shown) is further laminated thereon. On the other hand, on the surface of the second glass plate G2 as an image display screen faced toward the first glass plate G1, there are provided a color filter whose color regions are separated from each other by a black matrix, an overcoat, a transparent electrode, and an alignment film (not shown), and they are laminated in this order. The glass plate G1 and the glass plate G2 are bonded together with spacers (not shown), a resin 3 serving as a partition, and a resin 7 provided along the periphery of the glass laminate being interposed between them. It is to be noted that a polarizing plate is attached to each of the outer surfaces of the glass laminate 1 after the cutting step (ST5) of the cutting method according to the first embodiment of the present invention is performed.

Between the glass plates G1 and G2, there are provided liquid crystal cell regions 2 to be filled with a liquid crystal. The liquid crystal cell regions 2 are separated from each other by the resin 3 provided as a partition before the glass plate G1 and the glass plate G2 are bonded together. Further, the resin 7 provided along the periphery of the glass laminate entirely surrounds the liquid crystal cell regions 2 to provide an enclosed space prevented from being exposed to an etchant.

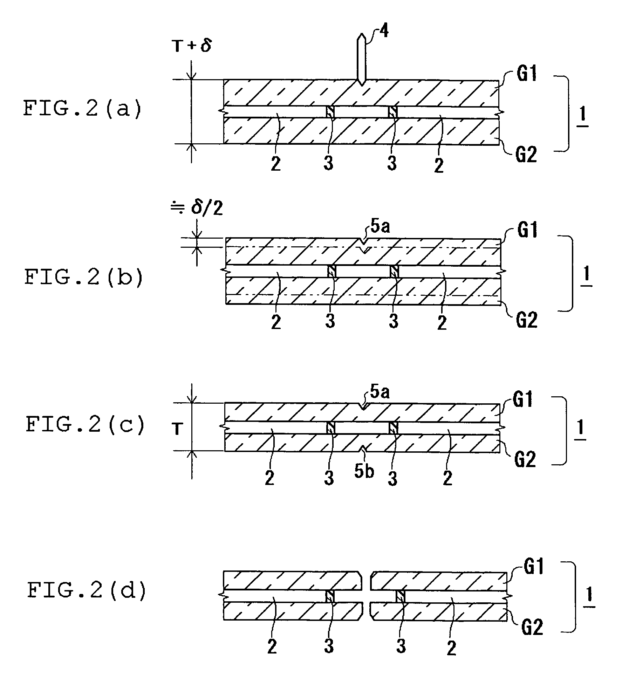

Next, the method for cutting a glass laminate according to the first embodiment of the present invention will be described with reference to the accompanying drawings. Figs. 2(a) to 2(d) are sectional views for illustrating the steps shown in Fig. 1(a), and correspond to the first scribing step (ST2), the additional etching step (ST3), the second scribing step (ST4), and the cutting step (ST5), respectively.

Prior to the first scribing step (ST2), the etching step (ST1) is performed to reduce the thickness of the glass laminate 1 to a value slightly thicker than a target thickness T by etching so that the glass laminate 1 has a thickness of T+δ. Here, the value δ corresponds to the difference between the thickness of the glass laminate 1 which has been subjected to the etching step (ST1) and the target thickness T of the glass laminate 1, and the value δ per entire glass laminate 1 is less than 200 µm, preferably 20 to 120 µm, more preferably 20 to 80 µm. That is, the value δ per each glass plate is less than 100 µm, preferably 10 to 60 µm, more preferably 10 to 40 µm when the gap between the glass plates G1 and G2 is ignored.

Then, as shown in Fig. 2(a), in the first scribing step (ST2), a scribe line 5a having a depth of about 10 to 15 % of the thickness of the first glass plate G1 is formed on the surface of the first glass plate G1. The scribe line 5a is formed by a sharp circumferential edge of a diamond or cemented carbide disc wheel cutter 4 between adjacent liquid crystal cell regions 2 to separate them from each other. The thus formed scribe line (cutting line) 5a is grown into a cutting groove by etching, and the cutting groove serves as a cutting line for the glass plate G1 in the cutting step (ST5).

In the additional etching step (ST3) shown in Fig. 2 (b) , the outer surface of the glass laminate 1 is brought into contact with an etchant, and is then washed with water to remove the etchant from the surface of the glass laminate 1. More specifically, the surface of the first glass plate G1 having the scribe line 5a and the surface of the second glass plate G2 are etched by bringing these surfaces into contact with an etchant. In this step, etching is performed by immersing the glass laminate 1 in an etchant. The etchant is not particularly limited as long as it is a liquid which can dissolve glass, but in this embodiment, an aqueous solution containing hydrogen fluoride in a concentration of 55 % or less is used.

In this additional etching step, both of the first and second glass plates G1 and G2 are etched to reduce the thickness of the glass laminate 1 by the value δ (that is, an amount of additional etching). By performing additional etching, it is possible to reliably remove cracks produced in the surface of the first glass plate G1 due to the formation of a scribe line 5a. However, a phenomenon in which the surface of a cutting groove grown from the scribe line 5a becomes completely smooth does not occur because the amount of etching performed on the glass plates G1 and G2 is limited.

In the second scribing step (ST4) following the additional etching step (ST3), as shown in Fig. 2 (c) , a second scribe line 5b is formed on the surface of the second glass plate G2. More specifically, a second scribe line 5b is formed by the wheel cutter 4 between adjacent display regions 2 at a position opposed to the first scribe line 5b, and the thus formed second scribe line 5b serves as a cutting line in the cutting step (ST5).

As described above, according to the cutting method of the first embodiment of the present invention, a scribe line 5b is not formed on the surface of the second glass plate G2 until the second scribing step (ST4) is performed. More specifically, a scribe line 5b, which may produce fractures in the second glass plate G2, is not formed on the surface of the second glass plate G2 until the second scribing step (ST4) is performed, and therefore the second glass plate G2 functions as a mechanical reinforcing plate for the first glass plate G1 during the additional etching step (ST3) and in the course of transferring the glass laminate 1 until the second scribing step (ST4) is performed.

In the cutting step (ST5) , as shown in Fig. 2 (d) , the glass laminate 1 is cut along the scribe lines 5a and 5b serving as cutting lines. In this step, stress is applied to the scribe lines 5a and 5b through the application of a load to cut the glass laminate 1 along the scribe lines 5a and 5b. As described above, since the scribe line 5a is grown into a cutting groove having no cracks by etching, the cut surface of the glass plate G1 which has been subjected to the cutting step is smoother than that of the glass plate G2.

The glass laminate 1 is cut into a plurality of glass laminates through the above steps, and the plurality of glass laminates are used as display panels. The first glass plate G1 of the display panel has a smooth cut surface, and therefore it is possible to reliably suppress the fracture of the glass laminate 1 even when an external load is applied to the display panel.

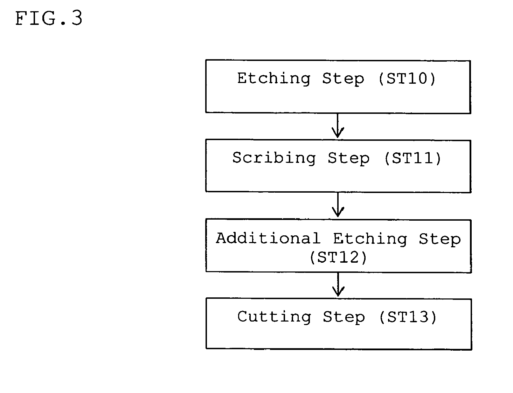

Fig. 3 is a flow diagram which shows a method for cutting a glass laminate according to a second embodiment of the present invention. The method for cutting a glass laminate according to the second embodiment of the present invention is accomplished by performing the following steps in order: an etching step (ST10) of chemically polishing a glass laminate 1 to reduce the thickness of the glass laminate 1 to a value slightly thicker than a target thickness T, a scribing step (ST11) of forming a scribe line 5a as a cutting line on the surface of a first glass plate G1 and a scribe line 5b as a cutting line on the surface of a second glass plate G2, an additional etching step (ST12) of immersing the glass laminate 1 in an etchant to reduce the thickness of the glass laminate 1 to the target thickness T, and a cutting step (ST13) of applying stress to the scribe line 5a formed on the surface of the first glass plate G1 and the scribe line 5b formed on the surface of the second glass plate G2 to cut the glass laminate 1.

As in the case of the first embodiment, in the etching step (ST10), the thickness of the glass laminate 1 is reduced to a value slightly thicker than the target thickness T so that the glass laminate has a thickness of T+δ. The value δ is less than 200 µm, preferably 20 to 120 µm, more preferably 20 to 80 µm.

Each of the scribe lines formed in the scribing step (ST11) has a predetermined depth that is about 10 to 15 % of the thickness of each glass plate which has been subjected to the etching step (ST10). In this step, each of the plurality of scribe lines is controlled to have a uniform depth from its starting point to end point and all the plurality of scribe lines are also controlled to have a uniform depth to effectively prevent the fracture of the glass substrates during various processes to be performed after the scribing step (ST11).

In the additional etching step (ST12) following the scribing step (ST11), the glass laminate 1 is etched to reduce the thickness of the glass laminate 1 by the value δ lying within the above range. The additional etching is performed under conditions where the flow of an etchant is completely stopped or an etchant gently flows so that the glass laminate 1 will not be shaken by the flow of the etchant.

According to the cutting method of the second embodiment of the present invention, each of a plurality of glass laminates obtained by cutting the glass laminate 1 exhibits excellent fracture resistance when external stress is applied thereto because part of the peripheral side surface of each of the first and second glass plates G1 and G2 on the outer surface side thereof has been made smooth by etching.

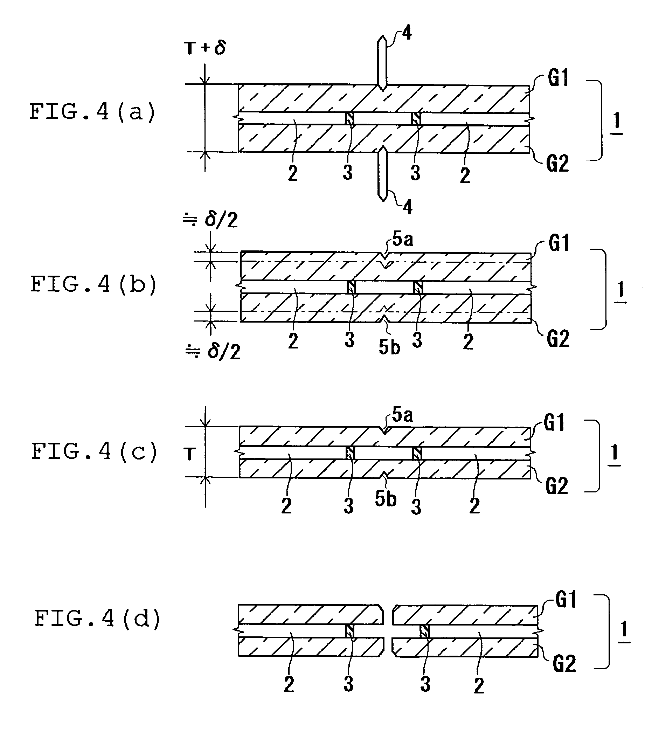

The first and second embodiments of the present invention have been described above concretely, but the present invention is not limited thereto. For example, the cutting method according to the present invention has been described based on a glass laminate for a liquid crystal display with reference to Figs. 1 to 5, but a glass laminate, to which the present invention can be applied, is not limited to a glass laminate for a liquid crystal display as long as it includes a pair of glass plates bonded together.

Further, in order to further improve the mechanical strength of the glass laminate 1 which has been subjected the cutting step, each of the glass laminates 1 separated is preferably subjected to final etching so that the peripheral side surface of each of the first and second glass plates G1 and G2 is partially or entirely etched.

## Claims

1. A method for cutting a glass laminate comprising a first glass plate and a second glass plate, the method comprising:
a first step of forming a first scribe line on the surface of the first glass plate;
a second step of bringing the first scribe line into contact with an etchant;
a third step of forming a second scribe line as a counterpart of the first scribe line on the surface of the second glass plate of the glass laminate which has been subjected to the second step; and
a fourth step of applying stress to the glass laminate to cut the glass laminate along the two scribe lines, wherein the first to fourth steps are performed in this order.

2. The method for cutting a glass laminate according to claim 1, further comprising, prior to the first step, the step of bringing the glass laminate into contact with an etchant to reduce the thickness of the entire glass laminate.

3. The method for cutting a glass laminate according to claim 2, wherein in the second step, the entire glass laminate is brought into contact with an etchant to reduce the thickness of both the first and second glass plates.

4. The method for cutting a glass laminate according to claim 3, further comprising, after the fourth step, the step of bringing the periphery of each of a plurality of glass laminates obtained by cutting the glass laminate into contact with an etchant.

5. A method for cutting a glass laminate comprising a first glass plate and a second glass plate, the method comprising:
a first etching step of bringing the entire glass laminate into contact with an etchant to reduce the thickness of the glass laminate to a value slightly thicker than a target thickness;
a scribing step of forming a pair of scribe lines on the surface of the first and second glass plates which have been subjected to the first etching step;
a second etching step of bringing the entire glass laminate into contact with an etchant to reduce the thickness of the glass laminate to the target thickness; and
a cutting step of applying stress to the glass laminate which has been subjected to the second etching step to cut the glass laminate along the pair of scribe lines, wherein the amount of etching performed in the second etching step on each of the glass plates is limited to less than 100 µm.

6. A method for manufacturing a flat panel display panel, comprising the method for cutting a glass laminate according to any one of claims 1 to 5.

7. A method for manufacturing a flat panel display, comprising the method for cutting a glass laminate according to any one of claims 1 to 5.

8. A flat panel display comprising:
a first glass plate not to be exposed to a user; and
a second glass plate to be exposed to a user, the first and second glass plates being bonded together, wherein the second glass plate entirely has a peripheral side surface physically cut, but on the other hand, the first glass plate has a peripheral side surface, at least part of which on the outer surface side thereof has been made smooth by etching a cutting line physically formed.
